# EUROPÄISCHE PATENTSCHRIFT

(11) **EP 2 730 772 B1**
(45) Veröffentlichungstag und Bekanntmachung des Hinweises auf die Patenterteilung: **08.08.2018**
(21) Anmeldenummer: 13191624.9
(22) Anmeldetag: 05.11.2013
(51) Int. Cl.: F02K 1/38, F02K 1/48

(54) **Düse mit Leitvorrichtungen**
Nozzle with baffles
Buse dotée de dispositifs de guidage

(30) Priorität: 08.11.2012 DE 102012220360
(43) Veröffentlichungstag der Anmeldung: 14.05.2014
(73) Patentinhaber: Rolls-Royce Deutschland Ltd & Co KG, 15827 Blankenfelde-Mahlow (DE)
(72) Erfinder: Rose, Marco, 09599 Freiberg (DE); Spieweg, Rene, 14197 Berlin (DE)
(74) Vertreter: Maikowski & Ninnemann Patentanwälte Partnerschaft mbB

(56) Entgegenhaltungen:
- EP-A2- 1 026 387
- EP-A2- 2 072 793
- WO-A1-2010/019131
- US-A- 3 514 955
- US-A1- 2004 255 573

## Beschreibung

Die Erfindung betrifft eine Düse mit Leitvorrichtungen gemäß dem Oberbegriff des Patentanspruchs 1. Eine solche Düse findet beispielsweise Verwendung in einer Gasturbine, insbesondere einem Flugzeugtriebwerk, oder in einem Brenner, einem Ejektor oder einer Mischdüse einer verfahrenstechnischen Anlage.

Beim Startvorgang eines Flugzeuges stellt der Antriebsstrahl eine erhebliche Schallquelle dar. Dabei tragen zur Schallerzeugung stabile, kohärente Wirbelstrukturen bei, die sich in den Scherschichten des Freistrahls bilden. Zur Minderung des Strahllärms sind zahlreiche passive und aktive Maßnahmen bekannt.

Die gattungsbildende EP 2 072 793 A2 beschreibt eine Düse mit Leitelementen, bei der am Düsenrand alternierend diffusorartige und düsenartige Leitelemente ausgebildet sind. Die Leitelemente bilden dabei in Strömungsrichtung abwechselnd konvergierende und divergierende Trapeze. Durch solche Leitelemente wird das ausströmende Medium am Düsenrand, wo das ausströmende Medium auf das umgebende Medium trifft, verwirbelt. Die dabei entstehenden Axial- und Radialwirbel schwächen dabei die stabilen, kohärenten und lärmerzeugenden Wirbelstrukturen und führen somit zu einer verminderten Lärmerzeugung im Antriebsstahl. Die EP 1 026 387 A2 offenbart eine vergleichbare Düse.

Es besteht ein fortlaufender Bedarf, eine weitere Minderung des Strahllärms von Flugzeugen bei gleichzeitig geringen aerodynamischen Verlusten bereitzustellen.

Dementsprechend liegt der vorliegenden Erfindung die Aufgabe zugrunde, eine Düse mit Leitelementen bereitzustellen, die eine weitere Verminderung der durch den Antriebsstrahl erzeugten Schallemissionen bereitstellt, bei gleichzeitig geringen aerodynamischen Verlusten.

Diese Aufgabe wird erfindungsgemäß durch eine Düse mit den Merkmalen des Anspruchs 1 gelöst. Ausgestaltungen der Erfindung sind in den Unteransprüchen angegeben.

Danach sieht die erfindungsgemäße Lösung eine Düse mit einer Düsenmantelfläche und einem Düsenrand vor, an dem in Umfangsrichtung abwechselnd erste und zweite Leitvorrichtungen angeordnet sind. Die ersten Leitvorrichtungen sind düsenartig ausgebildet und bilden einen offenen, konvergierenden Kanal. Die zweiten Leitvorrichtungen sind diffusorartig ausgebildet und bilden einen offen, divergierenden Kanal. Hierzu weisen die ersten Leitvorrichtungen jeweils eine erste azimuthale Leitwand und zwei Leitelemente auf, wobei die erste azimuthale Leitwand eine erste Abströmkante und zwei erste Kanten zu den Wandelementen ausbildet. Ebenso weisen die zweiten Leitvorrichtungen jeweils eine zweite azimuthale Leitwand und zwei Leitelemente auf, wobei die zweite azimuthale Leitwand eine zweite Abströmkante und zwei Kanten zu den Wandelementen ausbildet.

Ein Wandelement verbindet jeweils eine erste Leitvorrichtung und eine zweite Leitvorrichtung und ist dabei Teil beider Leitvorrichtungen. Dabei gilt, dass jedes Wandelement eine erste Kante zu einer der ersten Leitwände, eine zweite Kante zu einer der zweiten Leitwände und eine stirnseitige Abströmkante aufweist. Die beiden Kanten eines Wandelementes divergieren in axialer Richtung.

Erfindungsgemäß ist vorgesehen, dass bei einer solchen Düse zumindest einige der ersten Abströmkanten der ersten azimuthalen Leitwände und/oder zumindest einige der zweiten Abströmkanten der zweiten azimuthalen Leitwände schräg zur Umfangsrichtung verlaufen und hierdurch zumindest einige der stirnseitigen Abströmkanten benachbarter Wandelemente eine unterschiedliche axiale Position besitzen, wobei die Wandelemente mit einer radialen Komponente und einer Komponente in Umfangsrichtung schräg verlaufen und/oder die Wandelemente in axialer Richtung einen gekrümmten Verlauf besitzen.

Es werden somit schräge, zurückgeschnittene Abströmkanten (der ersten/zweiten Leitvorrichtungen und/oder der Wandelemente) bereitgestellt. Diese bewirken eine höhere räumliche Varianz der Richtung des Wirbelstärkevektors der abgehenden Wirbel und führen damit zur Reduktion der Intensität der großen, stabilen, kohärenten Wirbel. Der Wirkungsmechanismus zur Strahllärmreduktion wird somit durch die erfindungsgemäße Lösung verbessert. Dabei führt die Schwächung der großen, in Umfangsrichtung kohärenten Wirbelstrukturen zu einer verminderten Lärmerzeugung im Strahl.

Die erfindungsgemäße Lösung ermöglicht eine effiziente Reduktion des tieffrequenten Lärms, wobei der hochfrequente Lärm keine oder eine nur geringe Erhöhung erfährt. Gleichzeitig werden die Strömungsverluste durch eine optimierte Form der Wandelemente der Leitvorrichtungen minimiert. Die erfindungsgemäße Lösung ist darüber hinaus robust, wartungsarm sowie gewichtsneutral. Sie benötigt keine beweglichen Teile, keine Steuerung und keine gesonderte Energieversorgung. Sie ist damit auch kostengünstig.

Die erfindungsgemäße Düse kann bei allen Düsentypen angewendet werden, insbesondere auch an einer Düse mit einer Kernstromdüse und einer Nebenstromdüse. Die Leitvorrichtungen können integrierter Bestandteil der Düse sein, insbesondere aus Segmenten der Düsenmantelfläche gebildet sein, oder als Nachrüstsatz nachträglich an der Düsenmantelfläche befestigt werden.

Gemäß einer Ausführungsvariante verlaufen die Abströmkanten in einem Winkel von bis zu +/- 45° zur Düsenhauptachse bzw. Hauptströmungsrichtung.

Erfindungsgemäß befinden sich die stirnseitigen Abströmkanten benachbarter Wandelemente, die jeweils eine erste und eine zweite Leitvorrichtung verbinden, an unterschiedlichen axialen Positionen. Die azimuthalen Abströmkanten der ersten und zweiten azimuthalen Leitwände verlaufen schräg zur Umfangsrichtung und bedingen dadurch eine Variation der Länge (d. h. der axialen Ausdehnung) einer azimuthalen Leitwand in Umfangsrichtung.

Die Wandelemente, die jeweils eine erste Leitvorrichtung und eine zweite Leitvorrichtung miteinander verbinden, verlaufen gemäß einer Ausführungsvariante in radialer Richtung, d. h., sie sind senkrecht zu der Düsenmantelfläche ausgerichtet. Jedoch kann in alternativen Ausführungsvarianten ebenfalls vorgesehen sein, dass die Wandelemente schräg verlaufen, wobei sie eine radiale Komponente und eine Komponente in Umfangsrichtung aufweisen. Eine schräge Anordnung der Wandelemente führt dazu, dass die durch die ersten und zweiten Leitvorrichtungen bereitgestellten Kanäle sich in radialer Richtung verjüngen oder verbreitern. Dies kann zu einer zusätzlichen Verwirbelung am Düsenrand führen.

Eine Ausführungsvariante der vorliegenden Erfindung, bei die Wandelemente mit einer radialen Komponente und einer Komponente in Umfangsrichtung schräg verlaufen, sieht vor, dass die Wandelemente gerade Kanten aufweisen und dementsprechend als Dreiecke ausgebildet sind. Die Dreiecke erstrecken sich dabei von einem Anfangspunkt, der an die Düsenmantelfläche angrenzt, bis zu der stirnseitigen Abströmkante. Jedoch kann in alternativen Ausführungsbeispielen vorgesehen sein, dass die Wandelemente mit einer Krümmung versehen sind, wobei die durch die ersten und zweiten Leitvorrichtungen gebildeten Kanäle sich in axialer Richtung nicht linear, sondern z.B. bogenförmig verbreitern bzw. verjüngen.

Bei der erfindungsgemäßen Düse konvergieren und divergieren benachbarte Wandelemente abwechselnd und paarweise in axialer Richtung. Ein betrachtetes Wandelement bildet somit mit seinem einen Nachbarn einen konvergenten Kanal und mit seinem anderen Nachbarn einen divergenten Kanal.

Die ersten und die zweiten Leitwände können bezogen auf die Strömungsrichtung am Düsenrand in unterschiedlicher Weise geneigt sein. Hierzu kann insbesondere vorgesehen sein, dass die ersten Leitwände radial auswärts geneigt und die zweiten Leitwände radial einwärts geneigt sind oder umgekehrt. Dies bedeutet, dass die düsenartig ausgebildeten Leitvorrichtungen innenliegend, d. h. zum Strahl und die diffusorartigen Leitvorrichtungen nach außen zur Umgebungsströmung ausgerichtet sind, oder dass die diffusorartigen Leitvorrichtungen innenliegend, d. h. zum Strahl und die düsenartigen Leitvorrichtungen nach außen zur Umgebungsströmung ausgerichtet sind.

Die Erfindung wird nachfolgend unter Bezugnahme auf die Figuren der Zeichnung anhand mehrerer Ausführungsbeispiele näher erläutert. Es zeigen:
- Figur 1: ein erstes nicht-erfindungsgemäßes Ausführungsbeispiel erster und zweiter Leitvorrichtungen einer Düse;
- Figur 2: ein zweites erfindungsgemäßes Ausführungsbeispiel erster und zweiter Leiteinrichtungen einer erfindungsgemäßen Düse;
- Figur 3: eine perspektivische und schematische Ansicht eines ersten Ausführungsbeispiels einer Düse mit ersten und zweiten Leiteinrichtungen gemäß dem Stand der Technik; und
- Figur 4: eine perspektivisch und schematische Ansicht eines zweiten Ausführungsbeispiels einer Düse gemäß dem Stand der Technik.

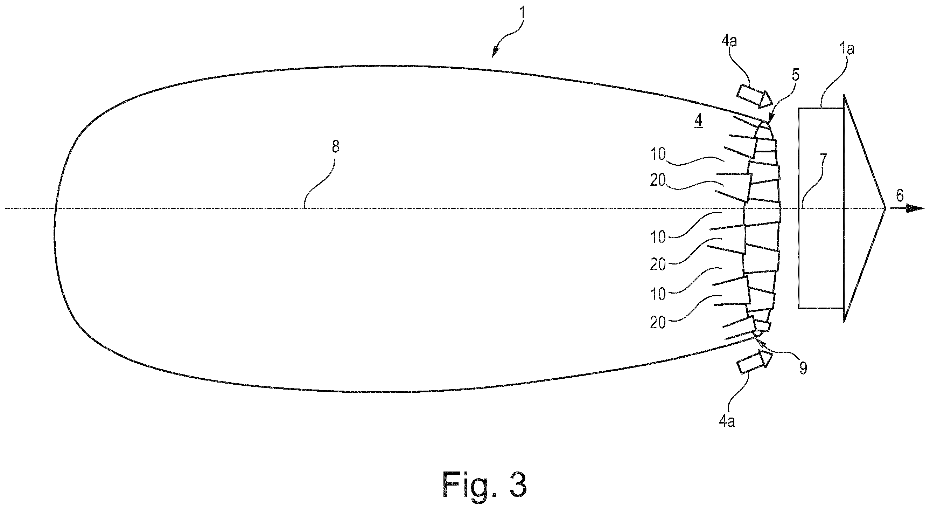

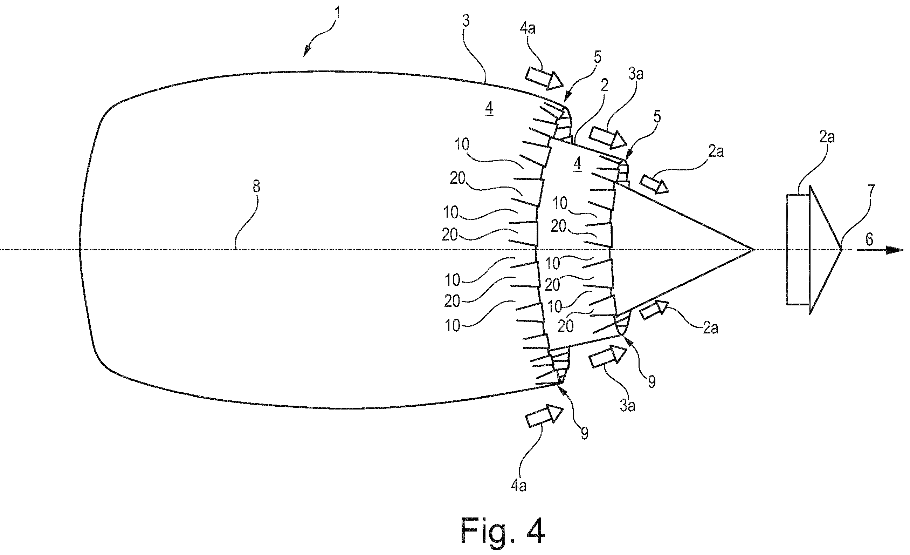

Zum besseren Verständnis des Hintergrunds der vorliegenden Erfindung werden zunächst anhand der Figuren 3 und 4 zwei Ausgestaltungen einer Düse mit ersten und zweiten Leitvorrichtungen gemäß dem Stand der Technik erläutert.

Die Figur 3 zeigt eine Düse 1 mit einer Düsenmantelfläche 4 sowie ersten Leitvorrichtungen 10 und zweiten Leitvorrichtungen 20, die an einem Düsenrand mit einer Strahlaustrittskante 5 ausgebildet sind. Die ersten Leitvorrichtungen 10 konvergieren in Strömungsrichtung 6 und sind radial nach innen geneigt, während die zweiten Leitvorrichtungen 20 in Strömungsrichtung 6 divergieren und radial nach außen geneigt sind. Eine umgekehrte Ausbildung ist ebenfalls möglich. Die Strahlachse 7 bildet in Strömungsrichtung 6 eine Verlängerung der Mittellinie 8 der Düse 1. Die Mittellinie 8 der Düse kann identisch mit der Mittelinie der Turbine sein (wie dargestellt), davon aber auch geringfügig abweichen.

Im Betrieb tritt ein Antriebsstrahl 1a an der Strahlaustrittskante aus der Düse aus. Eine Außenströmung 4a verläuft entlang der Düsenmantelfläche 4.

Die Figur 4 zeigt eine Düse 1, die eine Kernstromdüse 2 und eine Nebenstromdüse 3 umfasst. Die Kernstromdüse 2 und die Nebenstromdüse 3 weisen jeweils eine Düsenmantelfläche 4 mit einer Strahlaustrittskante 5 sowie erste Leitvorrichtungen 10 und zweite Leitvorrichtungen 20 an Düsenrändern 9 mit zugehörigen Strahlaustrittskanten 5 auf. Wie in der Figur 3 konvergieren die ersten Leitvorrichtungen 10 in Strömungsrichtung 6 und sind radial nach innen geneigt, während die zweiten Leitvorrichtungen 20 in Strömungsrichtung 6 divergieren und radial nach außen geneigt sind. Alternativ sind die ersten Leitvorrichtungen 10 radial nach außen und die zweiten Leitvorrichtungen 20 radial nach innen geneigt. Die Strahlachse 7 bildet in Strömungsrichtung 6 eine Verlängerung der Mittellinie 8 der Düse 1. Die Mittellinie 8 der Düse kann identisch mit der Mittelinie der Turbine sein (wie dargestellt), davon aber auch geringfügig abweichen.

Im Betrieb tritt im Ausführungsbeispiel der Figuren 4 ein heißer Kernstrom 2a aus der Kernstromdüse 2 aus. Ein kalter Nebenstrom 3a tritt aus der Nebenstromdüse 3 aus. Die Außenströmung 4a verläuft entlang der Düsenmantelfläche 4 der Nebenstromdüse 3. Eine Anordnung entsprechend den Figuren 3 und 4 ist in der EP 2 072 793 A2 beschrieben, auf die insofern ergänzend Bezug genommen wird.

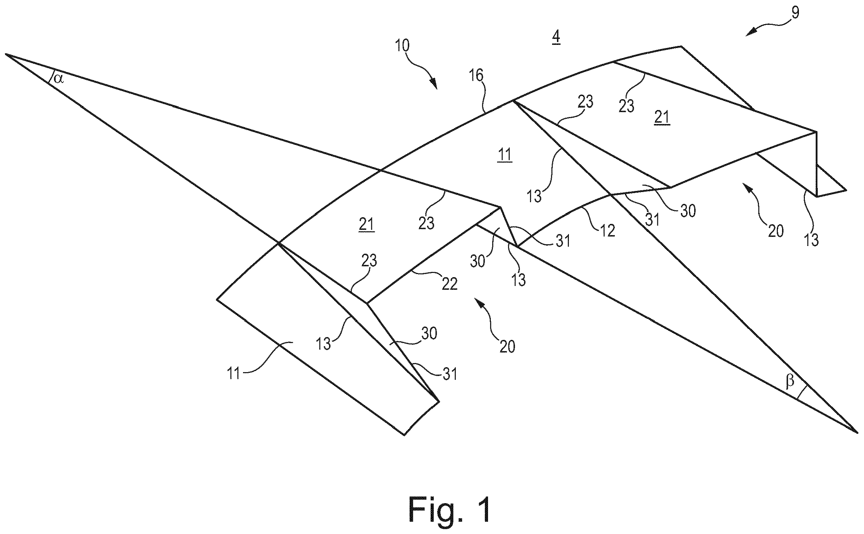

Die Figur 1 zeigt ein erstes Ausführungsbeispiel eines erfindungsgemäß ausgebildeten Düsenrandes mit ersten, düsenartig ausgebildeten Leitvorrichtungen 10 und zweiten, diffusorartigen Leitvorrichtungen 20, die zur Verbesserung des Wirkungsmechanismus zur Strahllärmreduktion in anderer Weise als gemäß den Figuren 3 und 4 ausgebildet sind.

Gemäß der Figur 1 wird der Düsenrand 9 aus ersten Leitvorrichtungen 10 und zweiten Leitvorrichtungen 20 gebildet. Die ersten Leitvorrichtungen 10 bilden einen düsenartigen Kanal und die zweiten Leitvorrichtungen 20 einen diffusorartigen Kanal aus.

Hierzu umfassen die ersten Leitvorrichtungen 10 jeweils eine (erste) azimuthale Leitwand 11 und zwei daran in Umfangsrichtung benachbart angrenzende Wandelemente 30. Die azimuthale Leitwand 11 wird dabei durch vier Begrenzungslinien bzw. Kanten begrenzt. Eine erste, in Strömungsrichtung gesehen axial vordere, azimuthal verlaufende Kante wird durch eine in Umfangsrichtung verlaufende Kante 16 gebildet, die an die Düsenmantelfläche 4 angrenzt und in axialer Richtung den Beginn der Leitelemente 10, 20 definiert. Eine zweite, in Strömungsrichtung gesehen axial hintere, azimuthal verlaufende Kante wird durch eine (erste) Abströmkante 12 gebildet. Die erste Leitvorrichtung 10 umfasst des Weiteren zwei seitliche, d. h. in Umfangsrichtung beabstandete Kanten 13 auf. Die Kanten 13 bilden Kanten zu den Wandelementen 30 und dabei Begrenzungen der azimuthalen Leitwand 11. Sie konvergieren gemäß einem Konvergenzwinkel β, wobei der Konvergenzwinkel β beispielsweise zwischen 0° und 7° liegt.

Die zweiten Leitvorrichtungen 20 umfassen ebenfalls eine (zweite) azimuthale Leitwand 21 und zwei Wandelemente 30. Die azimuthale Leitwand 21 wird dabei durch vier Begrenzungslinien bzw. Kanten definiert. Eine erste, axial vordere Kante wird durch die in Umfangsrichtung verlaufende Kante 16 gebildet. Eine zweite, axial hintere Kante wird durch eine (zweite) Abströmkante 22 gebildet. Des Weiteren sind zwei seitliche Kanten 23 zu den Wandelementen 30 vorgesehen. Die beiden Kanten 23 divergieren entsprechend einem Divergenzwinkel a, wobei der Divergenzwinkel a beispielsweise zwischen 0° und 7° liegt.

Die Wandelemente 30 sind dreieckförmig und werden durch die Kanten 13, 23 und 31 begrenzt. Sie sind im dargestellte Ausführungsbeispiel in sich eben, können alternativ aber auch in sich gebogen bzw. gekrümmt ausgebildet sein.

Die Wandelemente 30 verbinden jeweils eine erste Leitvorrichtung 10 und eine zweite Leitvorrichtung 20 miteinander und sind dabei Teil beider Leitvorrichtungen 10, 20 insofern, als jedes Wandelement 30 eine erste Kante 13 zu einer der ersten Leitwände 11 und eine zweite Kante 23 zu einer der zweiten Leitwände 21 aufweist. Jedes Wandelement 30 umfasst des Weiteren eine stirnseitige Abströmkante 31. Die beiden Kanten 13, 23 eines Wandelementes divergieren dabei stromabwärts in axialer Richtung.

Es wird darauf hingewiesen, dass die ersten Leitvorrichtungen 10 radial einwärts und die zweiten Leitvorrichtungen 20 radial auswärts bezogen auf die Strömungsrichtung geneigt sind. Es ist jedoch ebenso eine entgegengesetzte Ausrichtung der Leitvorrichtungen 10, 20 möglich.

Die azimuthalen Leitwände 11 der ersten Leitvorrichtungen 10 und die azimuthalen Leitwände 21 der zweiten Leitvorrichtungen 20 besitzen gemäß dem Ausführungsbeispiel der Figur 1 zumindest teilweise eine unterschiedliche axiale Länge. Das heißt, zumindest einige der ersten Abströmkanten 12 der ersten Leitvorrichtungen 10 und zumindest einige der zweiten Abströmkanten 22 der zweiten Leitvorrichtungen 20 besitzen eine unterschiedliche axiale Position. Dabei verlaufen die Abströmkanten 12, 22 der ersten und zweiten Leitvorrichtungen 10, 20 jeweils in Umfangsrichtung.

Entsprechend der unterschiedlichen axialen Position der ersten und der zweiten Abströmkanten 12, 22 sind zumindest einige der stirnseitigen Abströmkanten 31 der Wandelemente 30 schräg verlaufend mit einer axialen und einer radialen Komponente, wie aus der Figur 1 ersichtlich ist.

Es wird darauf hingewiesen, dass ein Wechsel der axialen Länge zwar sämtliche der ersten und zweiten Leitvorrichtungen 10, 20 erfassen kann, aber nicht muss. So ist beispielsweise im Ausführungsbeispiel der Figur 1 vorgesehen, dass die in der Figur 1 hinten angeordnete Leitwand 21 eine erste axiale Länge besitzt, die daran entgegen dem Uhrzeigersinn angrenzende Leitwand 11 demgegenüber eine geringere axiale Länge besitzt, so dass die stirnseitige Abströmkante 31 des dazwischen liegenden Wandelementes 30 schräg verläuft. Die sich entgegen dem Uhrzeigersinn an diese azimuthale Leitwand 11 angrenzende azimuthale Leitwand 21 einer zweiten Leitvorrichtung ist dagegen nicht gegenüber dieser Leitwand 11 axial versetzt. Ein axialer Versatz erfolgt erst wieder gegenüber der sich dann entgegen dem Uhrzeigersinn anschließenden ersten Leitvorrichtung 11.

Es kann somit beispielsweise vorgesehen sein, dass ein Wechsel der axialen Länge nicht bei jeder Leitvorrichtung 10, 20, sondern nur bei jeder n-ten Leitvorrichtung erfolgt, mit n größergleich zwei.

Auch kann ein Wechsel der axialen Länge nichtperiodisch erfolgen und hierzu beispielsweise in zufälliger Weise oder einer bestimmten Zahlenreihe folgend realisiert sein.

Insgesamt wird ein Düsenrand 9 bereitgestellt, bei dem die stirnseitigen Abströmkanten 31 zumindest einiger der Wandelemente 30 schräg verlaufen und durch die unterschiedlichen axialen Längen der azimuthalen Leitwände 11, 21 der Düsenrand 9 eine zusätzliche Variation erfährt. Hierdurch werden in verstärktem Maße eine lokale Beschleunigung und Verzögerung der vom Düsenrand 9 abgebenden Strömung im Bereich der Düsenaustrittskante und eine Variation der axialen Geschwindigkeit in Umfangsrichtung erreicht. Dabei werden Axial- und Radialwirbel stromab der Düse generiert, die mit dem stabilen Ringwirbel interagieren. Diese verformen sich schließlich und dissipieren. Dies sorgt für einen erhöhten Impulsaustausch, d. h., für eine bessere, homogene Durchmischung der Innenströmung 1a, 2a, 3a und der Außenströmung 3a, 4a (vgl. Figuren 3, 4). Die großen, tieffrequenten lärmerzeugenden Wirbelstrukturen werden in kleine Wirbelstrukturen zerschlagen, deren abgestrahlter, hochfrequenter Lärm besser atmosphärisch absorbiert wird.

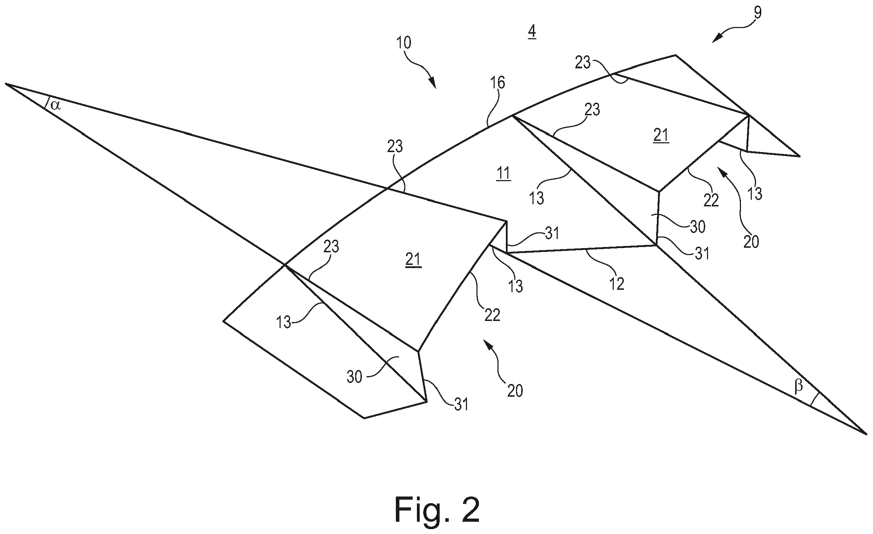

Die Figur 2 zeigt ein weiteres Ausführungsbeispiel eines Düsenrandes mit konvergenten und divergenten ersten und zweiten Leitvorrichtungen 10, 20. Hinsichtlich des Aufbaus der einzelnen Leitvorrichtungen 10, 20 wird dabei auf die Ausführungen in Bezug auf Figur 1 verwiesen.

Im Unterschied zum Ausführungsbeispiel der Figur 1 ist beim erfindungsgemäßen Ausführungsbeispiel der Figur 2 vorgesehen, dass zumindest einige der ersten Abströmkanten 12 der azimuthalen Leitwände 11 und/oder zumindest einige der zweiten Abströmkanten 22 der zweiten azimuthalen Leitwände 21 schräg zur Umfangsrichtung verlaufen. Hierdurch wird eine Variation der axialen Ausdehnung dieser azimuthalen Wände 11, 21 und damit der entsprechenden diffusorartigen Kanäle und düsenartigen Kanäle erreicht, die die zweiten und ersten Leiteinrichtungen 10, 20 bereitstellen.

Die Abströmkanten 12, 22 sind beispielsweise in einem Winkel kleiner gleich 45° zur Düsenhauptachse bzw. Hauptströmungsrichtung schräg ausgerichtet.

Die Abströmkanten 12, 22 verlaufen in einer Zick-Zack-Linie hin- und her, die die Strahlaustrittskante des Düsenrands definiert. Die gebildete Zick-Zacklinie kann regelmäßig mit festen Winkeln und Längen der Abströmkanten 12, 22 oder alternativ unregelmäßig mit sich ändernden Winkeln und/oder Längen der Abströmkanten 12, 22 gebildet sein.

Auch beim Ausführungsbeispiel der Figur 2 werden zusätzliche schräg verlaufende Kanten bereitgestellt, die den Wirkmechanismus zur Strahllärmreduktion verbessern, indem die lokale Beschleunigung und Verzögerung der vom Düsenrand 9 abgehenden Strömung im Bereich der Strahlaustrittskanten sich noch stärker herausbilden kann.

Die Ausführungsbeispiele der Figuren 1 und 2 können auch kombiniert werden. Beispielsweise kann beim Ausführungsbeispiel der Figur 1 vorgesehen sein, dass die dort vorgesehenen Abströmkanten 12, 22 ebenfalls schräg zur Umfangsrichtung verlaufen.

Zum Ausführungsbeispiel der Figur 2 wird darauf hingewiesen, dass auch hier ein schräger Verlauf der Abströmkanten nicht bei jeder der Leitvorrichtungen 10, 20 realisiert sein muss, sondern es ebenfalls im Rahmen der Erfindung liegt, einen solchen schrägen Verlauf nur bei einigen der Leitvorrichtungen 10, 20 vorzunehmen, wobei eine periodische oder nicht periodische Anordnung und Reihenfolge vorgesehen sein kann. Auch kann vorgesehen sein, dass die einzelnen Abströmkanten 12, 22 der einzelnen Leitvorrichtungen 10, 20 unterschiedliche Winkel in Bezug auf ihre Schrägstellung zur Umfangsrichtung realisieren.

Die Ausführungsbeispiele der Figuren 1 und 2 können dahingehend variiert werden, dass die Wandelemente 30 nicht, wie in den Figuren 1 und 2 dargestellt, in radialer Richtung verlaufen, d. h., senkrecht auf der Düsenmantelfläche 4 stehen, sondern eine schräge Ausbildung mit einer radialen Komponente und einer Komponente in Umfangsrichtung besitzen.

Die Erfindung beschränkt sich in ihrer Ausgestaltung nicht auf die vorstehend erläuterten Ausführungsbeispiele, die lediglich beispielhaft zu verstehen sind. So sind die dargestellten Winkel und Größenverhältnisse der ersten und zweiten Leitvorrichtungen lediglich beispielhaft zu verstehen. Auch kann vorgesehen sein, dass die Wandelemente 30 abweichend von den Darstellungen der Figuren 1 und 2 nicht in Dreiecksform ausgebildet sind, sondern in axialer Richtung einen gebogenen bzw. gekrümmten Verlauf besitzen. Hierdurch kann eine weitere Variation in der Ausgestaltung der offenen, durch die Leitvorrichtungen 10, 20 bereitgestellten Strömungskanäle erfolgen.

## Patentansprüche

1. Düse mit einer Düsenmantelfläche (4) und einem Düsenrand (9), an dem in Umfangsrichtung abwechselnd erste und zweite Leitvorrichtungen (10, 20) angeordnet sind, wobei
- die ersten Leitvorrichtungen (10) düsenartig ausgebildet sind,
- die zweiten Leitvorrichtungen (20) diffusorartig ausgebildet sind,
- die ersten Leitvorrichtungen (10) jeweils eine erste azimuthale Leitwand (11) und zwei Wandelemente (30) umfassen, wobei die erste azimuthale Leitwand (11) eine erste Abströmkante (12) und zwei erste Kanten (13) zu den Wandelementen (30) ausbildet,
- die zweiten Leitvorrichtungen (20) jeweils eine zweite azimuthale Leitwand (21) und zwei Wandelemente (30) umfassen, wobei die zweite azimuthale Leitwand (21) eine zweite Abströmkante (22) und zwei zweite Kanten (13) zu den Wandelementen (30) ausbildet, und
- ein Wandelement (30) eine erste Leitvorrichtung (10) und eine zweite Leitvorrichtung (20) miteinander verbindet und Teil beider Leitvorrichtungen (10, 20) ist, wobei jedes Wandelement (30) eine erste Kante (13) mit einer der ersten Leitwände (11), eine zu der ersten Kante (13) in axialer Richtung divergierende zweite Kante (23) mit einer der zweiten Leitwände (21) und eine stirnseitige Abströmkante (31) aufweist, wobei zumindest einige der ersten Abströmkanten (12) der ersten azimuthalen Leitwände (11) und/oder zumindest einige der zweiten Abströmkanten (22) der zweiten azimuthalen Leitwände (21) schräg zur Umfangsrichtung verlaufen und hierdurch zumindest einige der stirnseitigen Abströmkanten (31) benachbarter Wandelemente (11, 21) eine unterschiedliche axiale Position besitzen, **dadurch gekennzeichnet, dass**, die Wandelemente (30) mit einer radialen Komponente und einer Komponente in Umfangsrichtung schräg verlaufen und/oder die Wandelemente (30) in axialer Richtung einen gekrümmten Verlauf besitzen.

2. Düse nach Anspruch 1, **dadurch gekennzeichnet, dass** zumindest einige der Abströmkanten (12, 22) in einem Winkel kleinergleich ± 45° zur Düsenhauptachse verlaufen.

3. Düse nach Anspruch 1 oder 2, **dadurch gekennzeichnet, dass** zumindest einige der ersten und zweiten Abströmkanten (12, 22) in einer Zick-Zack-Linie hin und her verlaufen, die eine Strahlaustrittskante des Düsenrandes (9) definiert.

4. Düse nach einem der vorangehenden Ansprüche, **dadurch gekennzeichnet, dass** benachbarte Wandelemente (30) paarweise in axialer Richtung abwechselnd konvergieren und divergieren.

5. Düse nach einem der vorangehenden Ansprüche, **dadurch gekennzeichnet, dass** die ersten und zweiten Leitwände (11, 21) bezogen auf die Strömungsrichtung (6) am Düsenrand (9) in unterschiedlicher Weise geneigt sind.

6. Düse nach einem der vorangehenden Ansprüche, **dadurch gekennzeichnet, dass** die ersten Leitwände (11) radial einwärts geneigt sind und die zweiten Leitwände (21) radial auswärts geneigt sind oder umgekehrt.

7. Düse nach einem der vorangehenden Ansprüche, **dadurch gekennzeichnet, dass** die ersten Leitvorrichtungen (10) und/oder die zweiten Leitvorrichtungen (20) als Nachrüstsatz ausgebildet und an der Düsenmantelfläche (4) befestigt sind.

8. Gasturbine mit einer Düse gemäß Anspruch 1.

## Claims

1. Nozzle with a nozzle surface area (4) and a nozzle rim (9), on which first and second guiding devices (10, 20) are alternately provided in the circumferential direction, wherein
- the first guiding devices (10) are of the nozzle-type design,
- the second guiding devices (20) are of the diffuser-type design,
- the first guiding devices (10) each have a first azimuthal guide wall (11) and two wall elements (30), with the first azimuthal guide wall (11) forming a first trailing edge (12) and two first edges (13) to the wall elements (30),
- the second guiding devices (20) each have a second azimuthal guide wall (21) and two wall elements (30), with the second azimuthal guide wall (21) forming a second trailing edge (22) and two second edges (13) to the wall elements (30), and
- a wall element (30) connects a first guiding device (10) to a second guiding device (20) while forming part of both guiding devices (10, 20), with each wall element (30) having a first edge (13) to one of the first guide walls (11), a second edge (23) diverging to the first edge (13) in the axial direction to one of the second guide walls (21) and a front-side trailing edge (31),
wherein at least some of the first trailing edges (12) of the first azimuthal guide walls (11) and/ or at least some of the second trailing edges (22) of the second azimuthal guide walls (21) run obliquely to the circumferential direction, and by this at least some of the front-side trailing edges (31) of adjacent wall elements (11, 21) have a different axial position, **characterized in that** the wall elements (30) run obliquely with a radial component and a component in the circumferential direction, and/or the wall elements (30) have a curved course in the axial direction.

2. Nozzle in accordance with Claim 1, **characterized in that** at least some of the trailing edges (12, 22) run at an angle of less than or equal to +/-45° to the nozzle main axis.

3. Nozzle in accordance with Claim 1 or 2, **characterized in that** at least some of the first and second trailing edges (12, 22) extend back and forth in a zigzag line that defines a jet exit edge of the nozzle rim (9).

4. Nozzle in accordance with one of the preceding Claims, **characterized in that** adjacent wall elements (30) converge and diverge alternately and in pairs in the axial direction.

5. Nozzle in accordance with one of the preceding Claims, **characterized in that** the first and the second guide walls (11, 21) are inclined relative to the flow direction (6) at the nozzle rim (9) in different ways.

6. Nozzle in accordance with one of the preceding Claims, **characterized in that** the first guide walls (11) are inclined radially inwards and the second guide walls (21) are inclined radially outwards, or vice versa.

7. Nozzle in accordance with one of the preceding Claims, **characterized in that** the first guiding devices (10) and/or the second guiding devices (20) are provided as a retrofit kit and fastened to the nozzle surface area (4).

8. Gas turbine having a nozzle in accordance with Claim 1.

## Revendications

1. Tuyère avec une surface latérale de tuyère (4) et un bord de tuyère (9) sur lequel sont disposés en alternance dans le sens circonférentiel des premiers et seconds dispositifs de guidage (10, 20), sachant que
- les premiers dispositifs de guidage (10) sont en forme de tuyère,
- les seconds dispositifs de guidage (20) sont en forme de diffuseur,
- les premiers dispositifs de guidage (10) comprennent chacun une première paroi de guidage azimutale (11) et deux éléments de paroi (30), sachant que la première paroi de guidage azimutale (11) forme un premier bord de fuite (12) et deux premiers bords (13) par rapport aux éléments de paroi (30),
- les seconds dispositifs de guidage (20) comprennent chacun une seconde paroi de guidage azimutale (21) et deux éléments de paroi (30), sachant que la seconde paroi de guidage azimutale (21) forme un second bord de fuite (22) et deux seconds bords (13) par rapport aux éléments de paroi (30), et
- un élément de paroi (30) relie un premier dispositif de guidage (10) à un second dispositif de guidage (20) et fait partie des deux dispositifs de guidage (10, 20), sachant que chaque élément de paroi (30) présente un premier bord (13) avec une des premières parois de guidage (11), un second bord (23) divergeant du premier bord (13) dans le sens axial, avec une des secondes parois de guidage (21) et un bord de fuite (31) frontal,
sachant qu'au moins quelques-uns des premiers bords de fuite (12) des premières parois de guidage azimutales (11) et/ou au moins quelques-uns des seconds bords de fuite (22) des secondes parois de guidage azimutales (21) s'étendent obliquement par rapport au sens circonférentiel et qu'ainsi, au moins quelques-uns des bords de fuite (31) frontaux des éléments de paroi adjacents (11, 21) possèdent une position axiale différente, **caractérisée en ce que** les éléments de paroi (30) s'étendent obliquement avec une composante radiale et une composante dans le sens circonférentiel et/ ou que les éléments de paroi (30) possèdent un tracé recourbé dans le sens axial.

2. Tuyère selon la revendication n° 1, **caractérisée en ce qu'**au moins quelques-uns des bords de fuite (12, 22) s'étendent dans un angle inférieur ou égal à ± 45° par rapport à l'axe principal de la tuyère.

3. Tuyère selon la revendication n° 1 ou n° 2, **caractérisée en ce qu'**au moins quelques-uns des premiers et seconds bords de fuite (12, 22) s'étendent en alternance selon une ligne en zigzag qui définit un bord de sortie du jet du bord de la tuyère (9).

4. Tuyère selon une des revendications précédentes, **caractérisée en ce que** des éléments de paroi (30) adjacents convergent et divergent en alternance, deux à deux, dans le sens axial.

5. Tuyère selon une des revendications précédentes, **caractérisée en ce que** les premières et secondes parois de guidage (11, 21) sont inclinées de manière différente au bord de la tuyère (9), par rapport au sens d'écoulement (6).

6. Tuyère selon une des revendications précédentes, **caractérisée en ce que** les premières parois de guidage (11) sont inclinées radialement en dedans et les secondes parois de guidage (21) sont inclinées radialement en dehors ou inversement.

7. Tuyère selon une des revendications précédentes, **caractérisée en ce que** les premiers dispositifs de guidage (10) et/ ou les seconds dispositifs de guidage (20) sont constitués sous forme de jeu de rattrapage et sont fixés sur la surface latérale de la tuyère (4).

8. Turbine à gaz dotée d'une tuyère selon la revendication n° 1.
